# EUROPEAN PATENT SPECIFICATION

(11) **EP 4 175 450 B1**
(45) Date of publication and mention of the grant of the patent: **26.06.2024**
(21) Application number: 21751615.2
(22) Date of filing: 01.07.2021
(51) Int. Cl.: A01B 3/46

(54) **MOUNTED REVERSIBLE PLOUGH**
DREHBARER ANBAUPFLUG
CHARRUE RÉVERSIBLE MONTÉE

(30) Priority: 01.07.2020 IT 202000015910
(43) Date of publication of application: 10.05.2023
(73) Proprietor: Maschio Gaspardo S.p.A., 35011 Campodarsego (PD) (IT)
(72) Inventor: MASCHIO, Andrea, 33075 Morsano al Tagl.to (PN) (IT); MILAN, Federico, 30026 Portogruaro (VE) (IT); DE LORENZI, Massimo, 33079 Sesto al Reghena (PN) (IT)
(74) Representative: Locas, Davide
(86) International application number: PCT/IB2021/055905
(87) International publication number: WO 2022/003617

(56) References cited:
- EP-A2- 2 050 323
- DE-B1- 2 756 548
- DE-T2- 60 225 958
- PL-B1- 225 892
- US-A- 3 106 252
- US-A- 3 305 024

## Description

The present invention relates to a mounted reversible plough of a type including a wheel for adjusting the working depth of the plough.

Mounted reversible ploughs are normally provided in order to perform a 180° inversion of the frame of the plough about an inversion axis which is directed in the travel direction in order to bring the respective rows of ploughing elements to be alternatively operative on the ground to be ploughed depending on the position of the frame about the inversion axis.

These ploughs are normally provided with a support wheel which is in charge of adjusting the working depth of the ploughing elements. A need to provide a support wheel that allows to facilitate this adjustment is therefore felt.

In addition, it is evident that during the plough inversion phase the wheel must invert the working side. Normally, this inversion occurs due to the force of gravity during the rotation of the frame of the plough by 180° about the inversion axis. In this context, the technical problem of maintaining an optimal adjustment of the working depth of the plough in both working positions on opposing sides of the plough in a simplified way without requiring additional adjustment interventions is felt.

Various attempts have been made to solve the problem of providing a mounted reversible plough including a wheel with an effective and durable depth adjustment. The problem presents obvious difficulties, due in part to the need to limit the number of additional components that add to the cost and complexity of the plough.

Some examples of ploughs are described in DE 60225958, US 3106252, PL 225892, EP 2050323, US 3305024 or DE 2756548.

The technical problem underlying the present invention is that of realising a structurally mounted reversible plough and functionally designed to obviate at least in part one or more of the drawbacks complained of with reference to the state of the art.

This problem is solved by the invention by means of a plough made in accordance with one or more of the features of the appended claims.

It will be appreciated that the mounted reversible plough in accordance with the present invention comprises a frame and, preferably, an attachment member for attaching the frame to a tractor. In some embodiments, the frame carries at least a first ploughing element and at least a second ploughing element which are mutually opposing. In preferred embodiments, a plurality of first ploughing elements opposing to a plurality of second ploughing elements is provided.

Again preferentially, the frame is rotatably secured to the attachment member about an inversion axis in order to invert the frame.

It should be noted that, in this context, "inverting the frame" or "inverting the plough" means rotating the frame of the plough by about 180° about the inversion axis in order to bring the respective opposing ploughing elements to be alternately operative on the ground to be ploughed.

In some embodiments, it is also possible to rotate the frame about the inversion axis in a frame transport position corresponding to an intermediate frame rotation position where the opposing ploughing elements are operative on the ground.

Preferably, the plough further comprises a wheel which, advantageously, is configured for adjusting the working depth of the plough in two opposing operating positions of the wheel in which the first ploughing element and the second ploughing element are operative, respectively. It will be appreciated that where it is possible to rotate the frame in a transport position, the wheel can be a combined wheel. It should be noted that, in this context, "combined wheel" preferably means a wheel which is connected to the frame of the plough and functionally suitable for combining the adjustment of the working depth of the plough and the at least partial support of the same during the transport phase.

It must be pointed out that, in some embodiments, an arm is provided which on one side supports the wheel and on the other side is rotatably connected to a support of the frame about an oscillation axis which is transverse with respect to the inversion axis so as to allow an oscillation of the arm between the first and the second operating position of the wheel.

Preferably, the oscillation axis is perpendicular to the inversion axis.

Advantageously, the plough also comprises a first stop device and a second stop device which are configured so as to limit the oscillation of the arm in the first and second operating positions, respectively, so as to define a corresponding working depth of the plough in the operating positions.

According to a further advantageous aspect, the first and second stop devices are connected to a first oscillating element and a second oscillating element, respectively. Preferably, the first and second oscillating element are substantially identical and/or specular to each other. The first and second oscillating elements are hinged to the support and are kinematically connected to each other in an adjustable manner by means of an adjustment member which is configured to transmit a movement of one of the oscillating elements to the other oscillating element so as to adjust the working depth of the opposing ploughing elements in a substantially symmetrical manner.

In practice, when the frame of the plough is in one of two alternative operating positions, the wheel oscillation can be limited by the stop devices, which can be, for example, stop struts. Advantageously, the stop devices on the one hand are configured to abut the wheel arm and on the other hand they are configured to transmit the arm oscillation to the respective oscillating elements that are hinged to the frame support. According to a further advantageous aspect, the oscillating elements in turn are connected to each other by means of an adjustment member which is configured to act counter the oscillation in order to adjust the working depth of the opposing ploughing elements in a substantially symmetrical manner.

In this way, the invention eases the adjustment of the working depth by allowing, with a single adjustment, the symmetrical adjustment of the opposing ploughing elements. In fact, it must be observed that advantageously the adjustment of the working depth involves simultaneously both the ploughing elements which are operative on the ground and the ploughing elements which are at rest.

The characteristics and advantages of the invention will become clearer from the detailed description of an embodiment illustrated, by way of non-limiting example, with reference to the appended drawings wherein:
- Figures 1 and 2 are side views of the plough as a whole, in operating and transport position, respectively;
- Figures 3 and 4 are side and top views respectively of a detail of Fig. 1;
- Figures 5 and 6 are side and rear views respectively of a detail of Fig. 2;
- Fig. 7 is an exploded perspective view of a detail of the plough;
- Fig. 8 is a side view of a detail of the plough in two different positions;
- Fig. 9 is a perspective view of a detail of the plough;
- Fig. 10 is a side view of a detail of the plough;
- Fig. 11 is a view of the detail of Fig. 10, in three different positions;
- Fig. 12 is a view of a detail of Fig. 11;
- Figures 13 and 14 are perspective views of a detail of the plough, in a first position;
- Figures 15 and 16 are perspective views of the detail of Figures 13 and 14, in a second position;
- Fig. 17 is a cross-sectional perspective view of a detail of Fig. 7;
- Fig. 18 is a perspective view of the articulation of the wheel arm in accordance with a second embodiment of the invention;
- Fig. 19 represents a detail of Fig. 18.

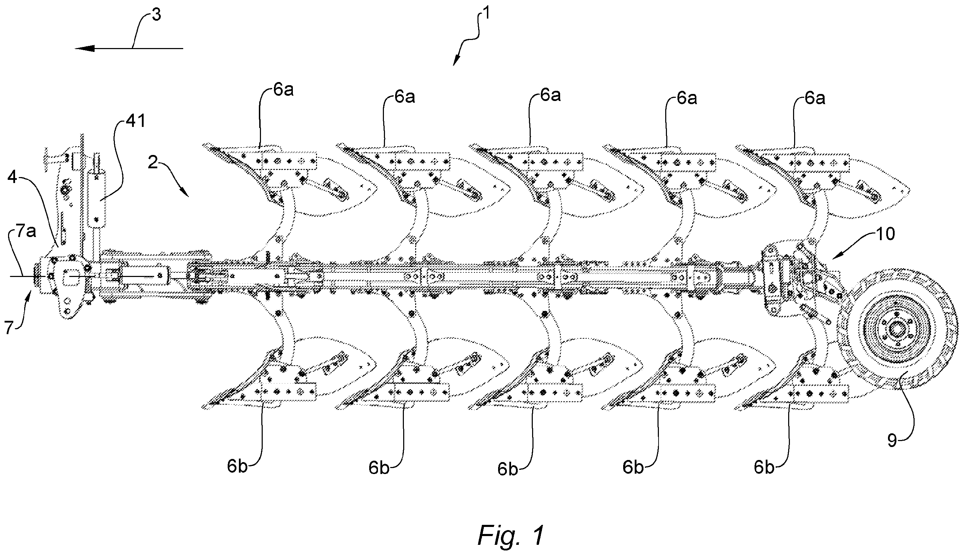

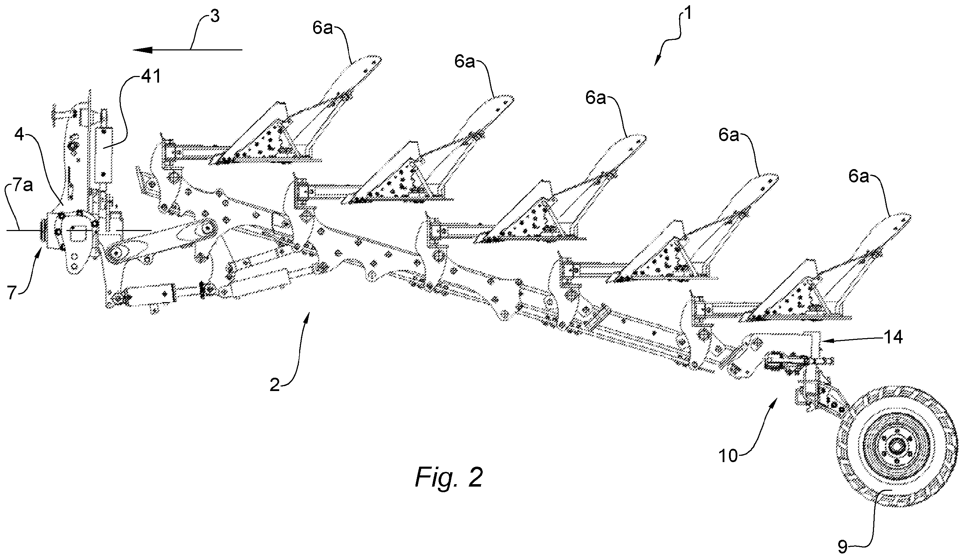

In the figures, 1 generally indicates a mounted reversible plough which, in operation, is normally towed in a direction of travel indicated by 3. The plough 1 comprises a frame 2 and an attachment member 4 for attaching the frame to a tractor (not shown). The frame 2 also carries first ploughing elements 6a and second ploughing elements 6b which are mutually opposing, shown in the example of Fig. 1 in an operating position of the second ploughing elements 6b and in the example of Fig. 2 in a transport position.

The frame 2 is rotatably secured to the attachment member 4 by means of an articulation 7 which is provided for an inversion of the frame 2 about an inversion axis 7a so as to rotate the frame 2 between two alternative operating positions. In the two alternative operating positions, the first and the second ploughing elements 6a and 6b are alternately operating on the ground.

Advantageously, the inversion axis 7a is directed in the travel direction 3. According to a further advantageous aspect, the two alternative operating positions of the frame 2 are mutually rotated by about 180° about the inversion axis 7a.

Preferably, a hydraulic drive 41 which is configured to invert the frame 2 is provided.

The plough 1 further comprises a wheel 9 for adjusting the working depth of the plough in the operating positions. A pivoting arm 11 supporting the wheel 9 is also provided. In a preferred example, the arm 11 is connected on the one hand to the wheel 9 by means of a rotatable constraint 12 which is configured to allow the wheel 9 to roll and on the other hand to a support 13 of the frame 2 by means of a second articulation 14 which is configured to allow an oscillation of the arm 11 about an oscillation axis 14a which is transverse to the inversion axis 7a. Preferably, when the plough is in the operating position with the ploughing elements operating on the ground, the oscillation axis 14a is horizontal and/or parallel to the ground.

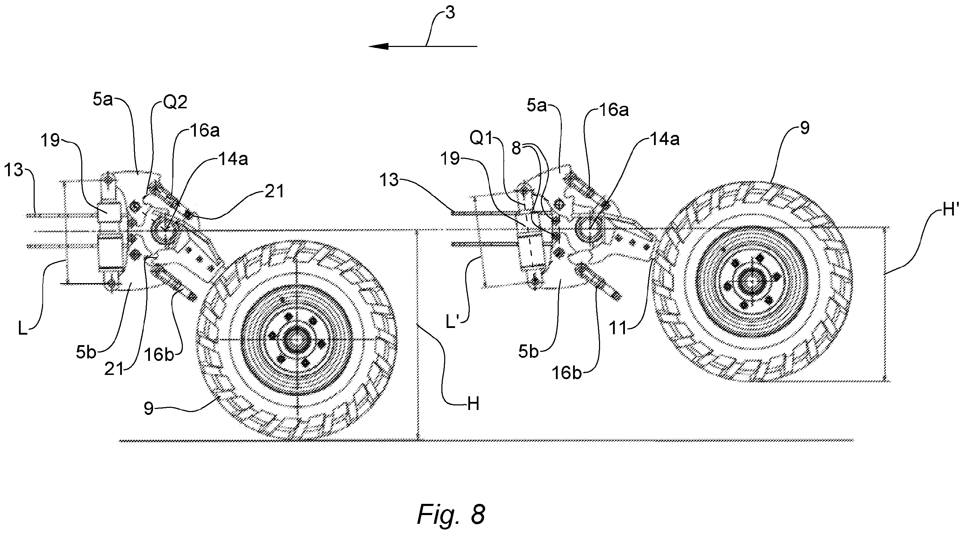

It will be appreciated that, when the plough is in the operating position, the oscillation of the arm 11 can be limited by a first stop device 16a on one side of the arm 11 and a second stop device 16b on the other side of the arm 11. Advantageously, the first stop device 16a and the second stop device 16b on the one hand are configured to abut the arm 11 and on the other hand they are configured to transmit the oscillation of the arm 11 respectively to a first oscillating element 5a hinged to the support 13 and to a second oscillating element 5b also hinged to the support 13. As shown in the example of Fig. 8, the first and the second ploughing element 5a and 5b are connected to each other by means of an adjustment member 19 configured to act counter the oscillation so as to symmetrically adjust the working depth of the first and second ploughing elements 6a and 6b that are opposing to each other. Advantageously, adjusting the working depth of the ploughing elements (6a or 6b) that are operating on the ground automatically and symmetrically leads to adjusting the working depth of the ploughing elements (6b or 6a respectively) that are at rest.

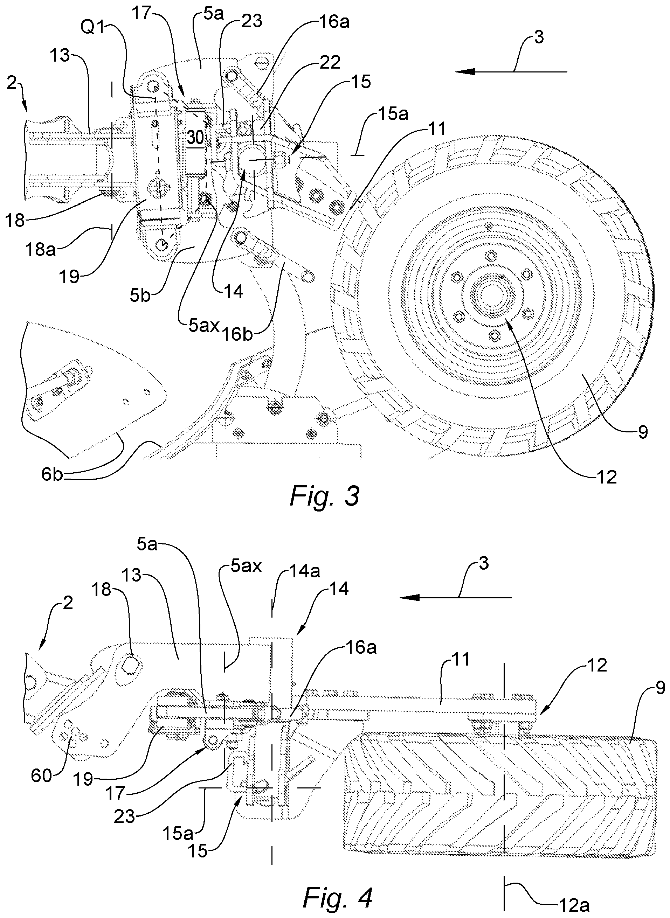

It will be appreciated that, advantageously, the first oscillating element 5a and the second oscillating element 5b form rocker arms of a first articulated quadrilateral Q1 having a side fixed in the support 13, as shown in the example of Fig. 3. In one aspect, the first oscillating element 5a and the second oscillating element 5b may perform an alternated rotational motion about respective rotary pairs connecting the oscillating elements 5a, 5b to the support 13. In this context, the adjustment member 19 forms the connecting rod of the first articulated quadrilateral Q1 and is configured to adjust the length of said connecting rod.

It should be noted that, in this context, "articulated quadrilateral" means a kinematic chain consisting of four rigid (or adjustable, as in the case of the adjustment member 19) members which are connected two by two, preferably by means of rotary pairs or articulation pins. Furthermore, it should be noted that, assuming that one of the members (the support 13) is fixed, "rocker arms" preferably refers to the two members that are adjacent to the fixed member, and "connecting rod" refers to the member which is opposite to the fixed member.

According to a further advantageous aspect, the first or second oscillating element 5a, 5b and the arm 11 when in abutment with the first or second stop device 16a, 16b form rockers of a second articulated quadrilateral Q2 having a side fixed in the support 13, as shown in the example of Fig. 8. In this context, said first or second stop device 16a, 16b forms a connecting rod of the second articulated quadrilateral Q2.

It will be appreciated that, preferably, the first articulated quadrilateral Q1 and the second articulated quadrilateral Q2 are kinematically connected to each other. Advantageously, the first articulated quadrilateral Q1 and the second articulated quadrilateral Q2 form a kinematic chain which is configured to transmit an adjustment movement of the adjustment member 19 to the arm 11 by interposition of the oscillating elements 5a, 5b and the stop devices 16a, 16b so as to symmetrically adjust the working depth of the opposing ploughing elements 6a, 6b.

Preferably, the first articulated quadrilateral Q1 and/or the second articulated quadrilateral Q2 are plane articulated quadrilaterals, i.e., they are articulated quadrilaterals having the axes of the rotary elements parallel to each other.

In the embodiment shown in the figures, the oscillating elements 5a and 5b comprise two perforated plates which are substantially identical to each other and which are symmetrically arranged with respect to the support 13. It will be appreciated that the first and second oscillating element 5a and 5b are hinged to the support 13 about respective hinge axes 5ax that are parallel to the oscillation axis 14a. Preferably, the first stop device 16a and the second stop device 16b are respectively secured to the first and the second oscillating element 5a and 5b in a rotatable manner about respective axes parallel to the oscillation axis 14a. In the embodiment shown, the first and the second stop device 16a and 16b are in the form of stop struts, i.e. stop elements which work under a prevalently compressive stress between the respective oscillating element 5a, 5b and the arm 11, such as specified in more detail below. The stop struts are two, identical to each other, and are axially extended so as to define an axial direction of the struts themselves.

In one aspect, when the plough is in the operating position, one of the oscillating elements (5a or 5b) faces upwards while the other oscillating element (5b or 5a, respectively) faces the ground.

It should be noted that, when the frame 2 rests on the ground by means of the wheel 9, preferably only one of the two stop devices (16a or 16b) is at work to oppose the oscillation of the arm 11. It should be noted that, in this context, the stop device (16a or 16b) lying closest to the ground is at rest while the stop device (16b or 16a respectively) furthest from the ground is at work, i.e. it abuts the arm 11. Advantageously, during the inversion of the frame 2, the stop devices 16a and 16b rotate about their rotatable constraint axes the respective oscillating elements 5a and 5b so as to move from the operating configuration on the arm 11 to the rest configuration or vice versa, by effect of the force of gravity.

When a stop device 16a or 16b is at work to oppose the oscillation of the arm 11, it is engaged between the respective oscillating element 5a or 5b to which it is rotatably secured and the arm 11 by the upwardly facing arm, thus undergoing a mainly compressive stress. In one aspect, the first and the second stop device 16a and 16b have a first end which is rotatably secured to the first and the second oscillating element 5a and 5b, respectively and a second end which is opposite to the first end, said second end being configured to abut respective recesses 21 made in the arm 11, as shown in the example of Fig. 8.

In one aspect, the support 13 comprises at least one first abutment 8 which is configured to limit a rotation path of the first and the second oscillating element 5a and 5b about the respective hinge axes 5ax. When the plough is in the operating position with a stop device 16a (or 16b) abutting the arm 11, this stop device forces the oscillating element 5a (or 5b) to which it is associated to rotate about the respective hinge axis 5ax. Since the oscillating element 5a (or 5b) is associated to the adjustment device 19, the rotation of this oscillating element 5a (or 5b) forces the compression of the adjustment member 19 which in turn forces the rotation of the other oscillating element 5b (or 5a) to which it is associated up to the point where the latter oscillating element 5b (or 5a) abuts against the first abutment 8 made in the support 13 in order to limit the rotation path of the oscillating element 5b (or 5a) as shown in Fig. 8. In this way, the extension of the adjustment element 19 causes the rotation of an oscillating element with respect to the other oscillating element.

In one aspect, the oscillating elements 5a and 5b function as mechanical rockers, that is as oscillating arms pivoted to the support 13 to realise a mechanical lever of the first class. In fact, when the wheel 9 rests on the ground, the oscillating element 5b (or 5a) which - depending on the operating position of the frame 2 about the inversion axis 7a - is not kinematically connected to the arm 11, is pushed by the adjustment member 19 towards the first stop 8. On the other hand, the oscillating element 5a (or 5b) which - depending on the operating position of the frame 2 about the inversion axis 7a - is kinematically connected to the arm 11, realises a first-class lever pivoting about its own hinge axis 5ax. In practice, the fulcrum is interposed between the two forces that are applied respectively by the oscillation of the arm 11 on the one hand and by the adjustment member 19 on the other hand. Thus, on the one hand, the lever is stressed by the stop device 16a (or 16b), which abuts the arm 11, and on the other hand, the lever in turn stresses the adjustment member 19. In this way, the oscillating element 5a (or 5b) which is kinematically connected to the arm 11 may rotate by effect of a change in extension of the adjustment member 19 while the oscillating element 5b (or 5a) which is not kinematically connected to the arm 11 maintains its position being abutted by the first stop 8. When the wheel 9 moves from one operating position to another, the working depth adjustment remains unchanged.

As shown in the example of Fig. 8, the adjustment member 19 has a variable extension L, L' which allows controlling the rotation of the oscillating element 5a (or 5b) which - depending on the operating position of the frame 2 about the inversion axis 7a - is kinematically connected to the arm 11. The rotation of this oscillating element 5a (or 5b) in turn adjusts the position of the arm 11 and thus the distance H, H' of the wheel 9 from the frame 2 so as to adjust the working depth of the ploughing elements 6a and 6b.

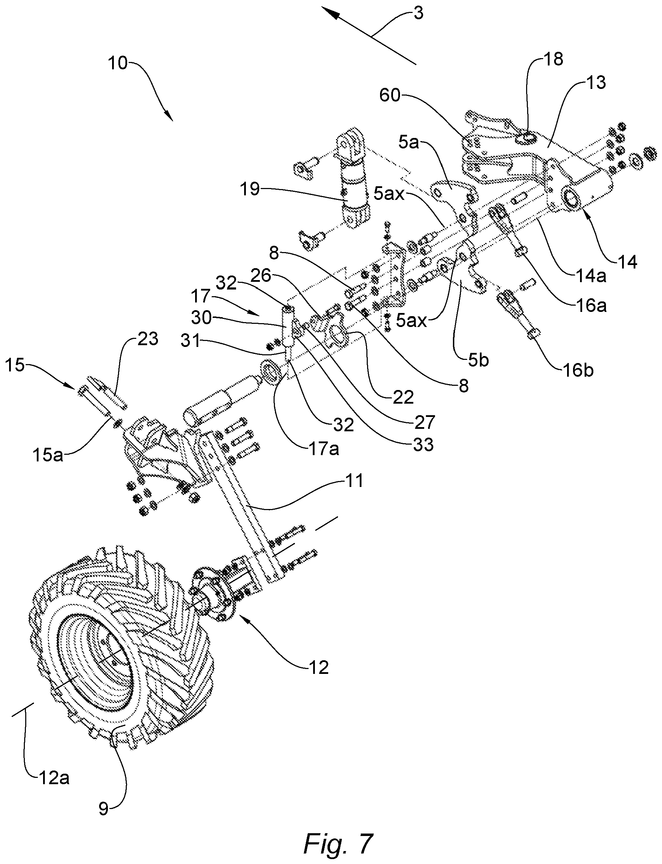

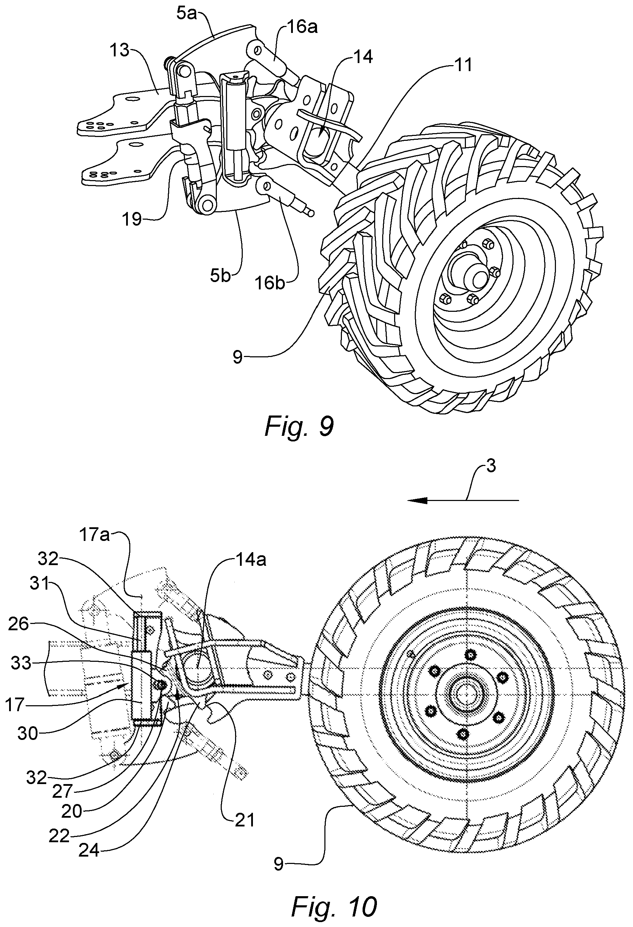

The adjusting member 19 may comprise at least one adjustment device chosen from a hydraulic cylinder as shown, for example, in Fig. 7, a mechanical tie rod as shown, for example, in Fig. 9, an electromechanical device (not shown) or an element (for example a rod or a plate) provided with a plurality of holes (not shown). It will be appreciated that said holes preferably have a fixed position.

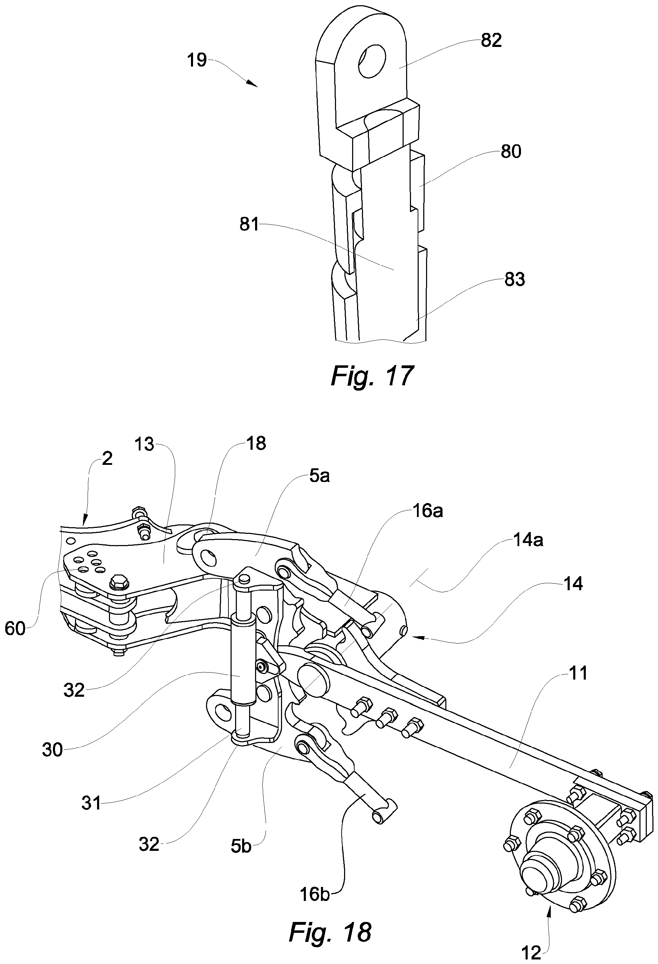

As shown in the example of Fig. 17, the adjustment member 19 may comprise an adjustable end stop 80 which is configured to adjust the minimum length of the adjustment member itself. It will be appreciated that the end stop 80 may comprise, for example, a threaded bushing whose position may be adjusted by screwing/unscrewing with respect to the main body 81 of the adjustment member 19. At work, the main body 81 is secured to the first and the second oscillating element 5a and 5b at their annular ends 82. When the movable body 83 of the adjusting member is moved with respect to the main body 81 in order to raise the frame of the plough with respect to the ground, the end stop 80 maintains its position. In this way, it is possible to raise the frame with respect to the ground by extending the adjustment member 19 without losing the reference position set by means of the adjustable end stop 80. In some embodiments not shown, the end stop 80 comprises a plurality of shims having different heights.

During the inversion of the frame 2, the oscillation of the wheel 9 between the two alternative operating positions can be slowed down by means of a damper 17.

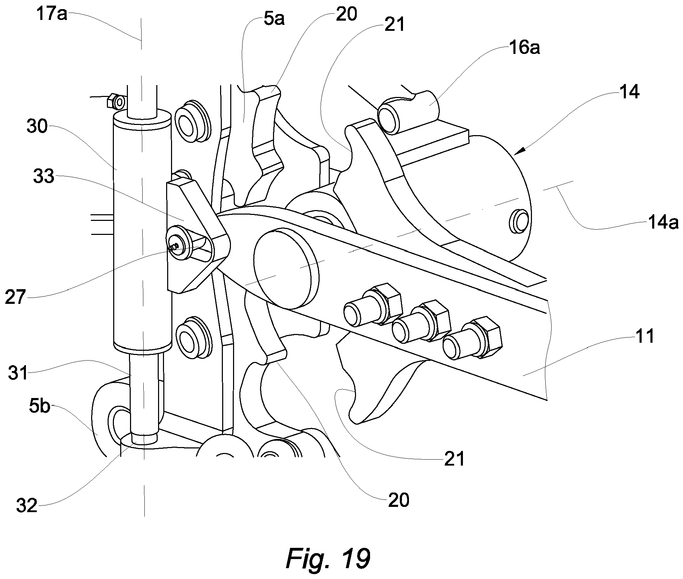

As highlighted in the examples of figures 18 and 19, the damper 17 advantageously comprises a movable element 30 which is kinematically connected to the arm 11 during the inversion of the frame 2. The movable element 30 is configured to slide along a support 31 which is longitudinally extended so as to slow down the oscillation of the arm 11 during the inversion.

In one aspect, the support 31 develops along a sliding axis 17a between two opposing ends 32 of the support 31. The ends 32 of the support 31 are secured to the support 13.

Preferably, the support 31 is a rod 31 and the movable element 30 is a sleeve 30 of said rod 31.

Even more preferably, the sleeve 30 is configured to slide along the rod 31 in the presence of a viscous fluid. Advantageously, the actuation of the damper 17 moves the viscous oil from one side to the other side of the damper through a calibrated passage (not shown) which allows the oil to seep between two chambers (not shown), with consequent damping of the sliding speed of the sleeve 30 along the rod 31.

In some embodiments, the movable element 30 is kinematically connected to the arm 11 through a manoeuvring pin 27 which is secured to the arm 11 and configured to abut a slot 33 associated with the movable element 30, as shown in the example of Fig. 19. Advantageously, the manoeuvring pin 27 is secured to the arm 11 on the opposite side with respect to the wheel 9. According to a further advantageous aspect, the support 31 is adjacent to the pin of the second articulation 14, on the part of the arm 11 opposite to the wheel 9.

In preferred embodiments, the movable element 30 is configured to slide with respect to the support 31 along a sliding axis 17a which is transverse to the inversion axis 7a and/or the oscillation axis 14a. Preferably, the sliding axis 17a is perpendicular to the inversion axis 7a and/or to the oscillation axis 14a.

It will be appreciated that, in one aspect, the arm 11 during the inversion of the frame 2 forms a lever which is pivoted about the oscillation axis 14a, the wheel 9 and the damper 17 being configured to apply to the lever a motive force-weight and a resistant force counter to the motive force-weight, respectively.

As shown in the example of Fig. 18, the lever formed by the arm 11 during the inversion of the frame 2 may be a lever of the first class in which the motive force-weight and the resistant force are applied to the arm 11 in diametrically opposite positions with respect to said oscillation axis 14a.

According to a further advantageous aspect, the lever formed by the arm 11 during the inversion of the frame 2 may be a lever of the second class, in which the motive force-weight and the resistant force are applied to the arm 11 from the same side with respect to the oscillation axis 14a.

As shown in the example of Fig. 10, in some embodiments the movable element 30 is kinematically connected to the arm 11 during the inversion of the frame 2 by means of a mechanical element 22 which is rotatably secured about the oscillation axis 14a. As shown in the example of Fig. 7, the mechanical element 22 may be in the form of a plate with a central hole which is configured to receive a pin of the second articulation 14. In this context, the mechanical element 22 is driven in rotation about the oscillation axis 14a by the arm 11 during the inversion of the frame 2. It will be appreciated that the damper 17 is configured to act counter the rotation of the mechanical element 22 about the oscillation axis 14a so as to slow down the oscillation of the arm 11 during inversion.

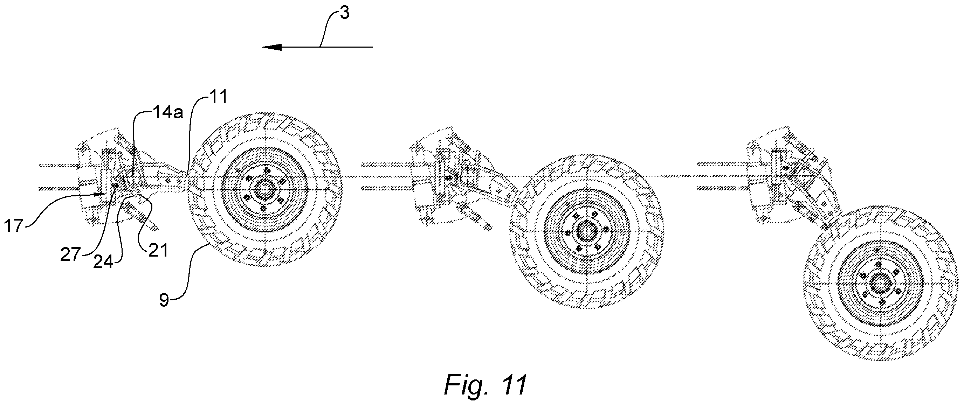

The operation of the damper 17 under these conditions is illustrated by way of example in the sequence in Fig. 11. It will be appreciated that the movable element 30 is kinematically connected to the mechanical element 22. In one aspect, the mechanical element 22 comprises a portion 26 which is extended radially with respect to the oscillation axis 14a, said portion 26 including a manoeuvring pin 27 which is adapted to engage in the slot 33 made in the movable element 30. Advantageously, the coupling of the manoeuvring pin 27 with the slot 33 makes it possible to convert a rotation of the mechanical element 22 into a translation of the movable element 30 along the support 31.

In one aspect, the mechanical element 22 comprises two teeth 24 extending radially with respect to said oscillation axis 14a. Advantageously, the teeth 24 are configured to engage in abutment on the arm 11 so as to achieve a rotoidal coupling between said mechanical element 22 and said arm 11 about the oscillation axis 14a.

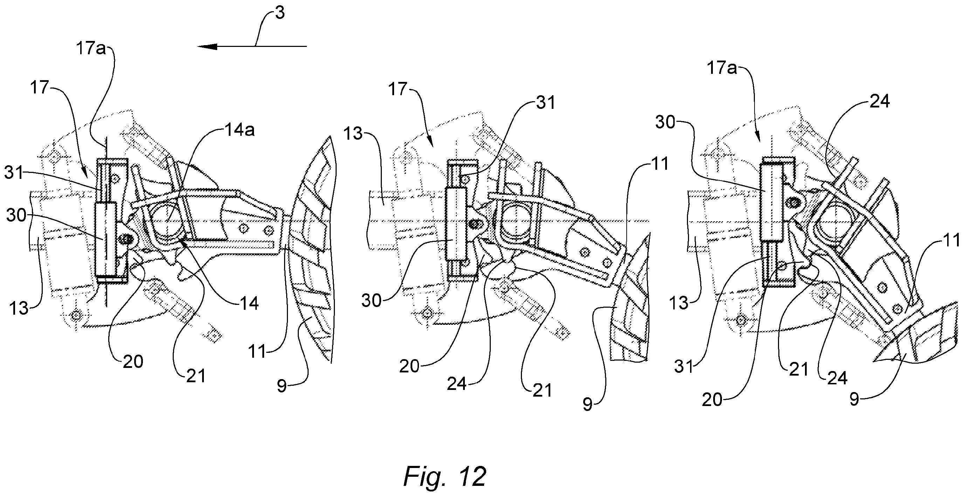

According to a further advantageous aspect, the oscillating elements 5a and 5b comprise a second abutment 20 which is configured to limit an oscillation path of the arm 11 about the oscillation axis 14a, as shown in the example of Fig. 12. Advantageously, the second abutment 20 is configured to engage in and disengage from respective recesses 21 of the arm 11.

In one aspect, the second abutment 20 is configured to limit a rotation path of the mechanical element 22 about the oscillation axis 14a. Preferably, the teeth 24 of the mechanical element 22 are adapted to engage on said second abutment 20 in order to limit the rotation path of the mechanical element 22.

It will be appreciated that the mechanical element 22 is particularly advantageous where the wheel 9 is a combined wheel, as explained in more detail below.

Indeed, it should be noted that in some embodiments the frame 2 is rotatably secured to the attachment member 4 so as to rotate between the two alternative operating positions and further a transport position which is intermediate between the two alternative operating positions. The transport position is located at an intermediate position between the two alternative operating positions, i.e. it is located substantially at 90° of rotation about the inversion axis 7a with respect to each of the two alternative operating positions. By way of illustration, it will be appreciated that the frame 2 is shown in Fig. 1 in an operating position and in Fig. 2 in a transport position rotated by 90° about the inversion axis 7a with respect to the operating position of Fig. 1. In this context, the wheel 9 is a wheel of the combined type.

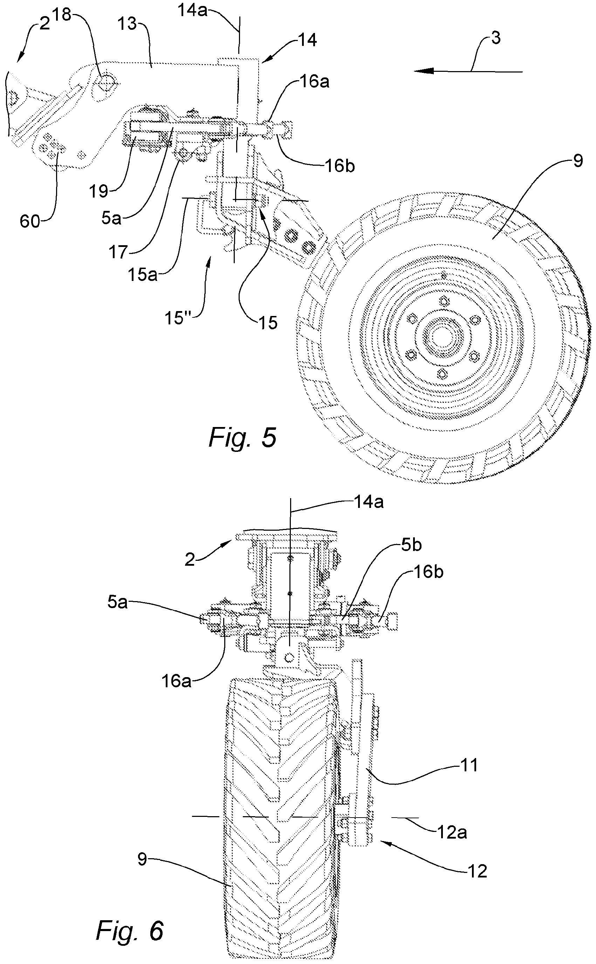

During the transport phase, the oscillation axis 14a is vertical and/or perpendicular to the ground. In this context, the arm 11 is configured to rotate about a repositioning axis 15a of a third articulation 15 which is perpendicular to the oscillation axis 14a of the second articulation 14 in order to move the combined wheel 9 between a first position 15' in which the combined wheel 9 is configured to adjust the working depth of the ploughing elements 6a or 6b as shown in the examples of Figures 3 and 4, and a second position 15" in which the combined wheel 9 is configured to support the frame 2 in a transport position as shown in the examples of Figures 5 and 6.

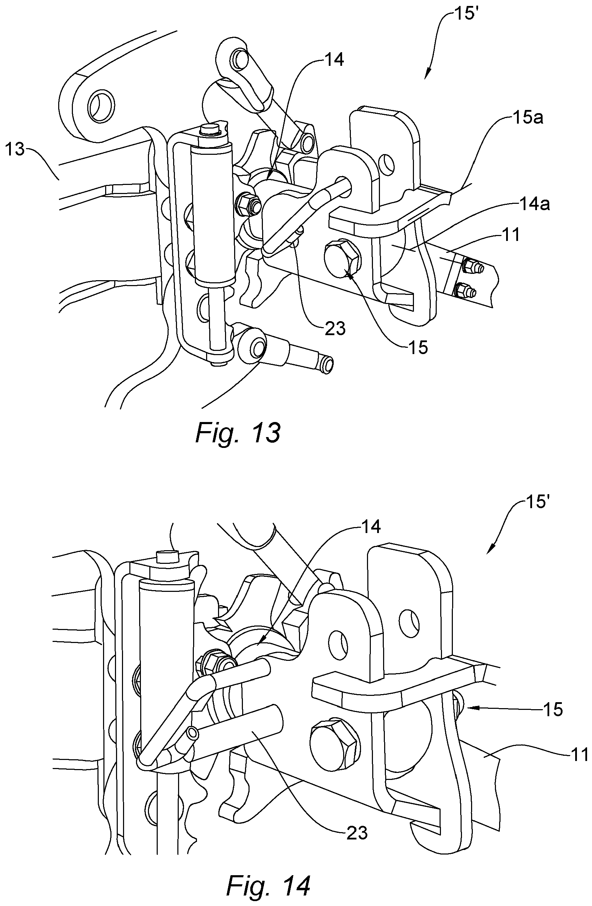

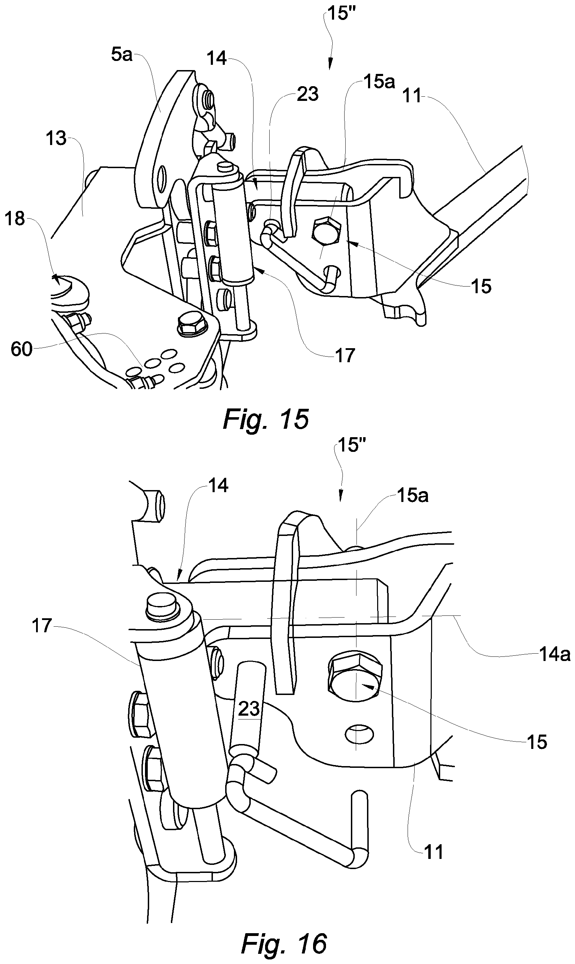

Advantageously, there is provided a safety pin 23 which is configured to block the rotation of the arm 11 about the repositioning axis 15a in the first position 15' of the combined wheel 9 as shown in the examples of Figures 13 and 14 or in the second position 15" of the combined wheel 9 as shown in the examples of Figures 15 and 16.

According to a further advantageous aspect, the arm 11 is disconnected from the mechanical element 22 when the combined wheel 9 is in the second position 15". In this way the combined wheel 9 is free to oscillate about the oscillation axis 14a without hindrances, thus allowing a change in the rolling direction of the wheel according to the path taken during transport.

In some embodiments, the support 13 is connected to the frame 2 by means of a fourth articulation 18 having a fourth axis 18a which is perpendicular to the inversion axis 7a and to the oscillation axis 14a. Advantageously, the fourth articulation 18 allows an inclination of the oscillation axis 14a with respect to the inversion axis 7a about the fourth axis 18a to be adjusted. Preferably, as shown in Fig. 4, a perforated plate 60 which is adapted to fix the fourth articulation 18 in an adjustable position is provided.

The invention thus solves the problem posed by achieving numerous advantages including:
- easing the adjustment of the working depth by allowing, with a single adjustment, the symmetrical adjustment of the opposing ploughing elements;
- adjusting the wheel by means of a single adjustment member, possibly by means of a single hydraulic hose from the tractor to the combined wheel;
- raising the frame without losing the previously set working depth adjustment;
- slowing down the descent of the wheel from one operating position to another when inverting the frame;
- easing the movement of the combined wheel to and from the transport position.

## Claims

1. A mounted reversible plough (1) comprising a frame (2) and an attachment member (4) for attaching said frame (2) to a tractor, said frame (2) carrying at least a first ploughing element (6a) and at least a second ploughing element (6b) which are mutually opposing and the frame (2) being rotatably secured to said attachment member (4) about an inversion axis (7a) in order to invert said frame (2), said plough (1) further comprising a wheel (9) which is configured for adjusting a working depth of the plough in two opposing operating positions of the wheel (9), in which said first ploughing element (6a) and second ploughing element (6b) are operative, respectively, an arm (11) which, on the one hand, supports said wheel (9) and, on the other hand, is rotatably connected to a support (13) of said frame (2) about an oscillation axis (14a) which is transverse with respect to said inversion axis (7a) so as to allow an oscillation of said arm (11) between the first and the second operating position of the wheel (9) and a first stop device (16a) and a second stop device (16b) which are configured so as to limit the oscillation of the arm (11) in said first and said second operating positions, respectively, so as to define a corresponding working depth of the plough in said operating positions, **characterized in that** said first and second stop devices (16a, 16b) are connected to a first oscillating element (5a) and a second oscillating element (5b), respectively, said first and second oscillating elements (5a, 5b) being hinged to said support (13) and being kinematically connected to each other in an adjustable manner by means of an adjustment member (19) which is configured to transmit a movement of one of the oscillating elements (5a, 5b) to the other oscillating element (5b, 5a) so as to symmetrically adjust the working depth of the opposing ploughing elements (6a, 6b).

2. A plough (1) according to claim 1, wherein said first oscillating element (5a) and second oscillating element (5b) form rocker arms of a first articulated quadrilateral (Q1) having a side fixed in said support (13), said adjustment member (19) forming a connecting rod of said first articulated quadrilateral (Q1) and being configured to adjust the length of said connecting rod.

3. A plough (1) according to claim 1 or 2, wherein said first or second oscillating element (5a, 5b) and said arm (11) when in abutment with said first or second stop device (16a, 16b) form rocker arms of a second articulated quadrilateral (Q2) having a side fixed in said support (13), said first or second stop device (16a, 16b) forming a connecting rod of said second articulated quadrilateral (Q2).

4. A plough (1) according to any one of the preceding claims, wherein said adjustment member (19) comprises at least one adjustment member to be chosen from a hydraulic cylinder, a mechanical tie rod, an electromechanical device or an element provided with a plurality of holes.

5. A plough (1) according to any one of the preceding claims, wherein said first and second oscillating elements (5a, 5b) are hinged to said support (13) about respective hinge axes (5ax) which are parallel to said oscillation axis (14a).

6. A plough (1) according to any one of the preceding claims, wherein said support (13) comprises a first abutment (8) which is configured to limit a rotation path of said first and second oscillating elements (5a, 5b) about said hinge axes (5ax).

7. A plough (1) according to any one of the preceding claims, wherein said first and second oscillating elements (5a, 5b) comprise a second abutment (20) which is configured to limit an oscillation path of said arm (11) about said oscillation axis (14a).

8. A plough (1) according to any one of the preceding claims, further comprising a damper (17) which is configured to slow down the oscillation of said arm (11) during the inversion of the frame (2).

9. A plough (1) according to claim 8, wherein said damper (17) comprises a movable element (30) which is kinematically connected to said arm (11) during the inversion of the frame (2), said movable element (30) being configured to slide along a support (31) which extends longitudinally and the ends (32) of which are secured to said support (13) so as to slow down the oscillation of the arm (11) during said inversion.

10. A plough (1) according to claim 9, wherein said support (31) is a rod (31) and said movable element (30) is a sleeve (30) of said rod (31).

11. A plough (1) according to claim 9 or 10, wherein said movable element (30) is kinematically connected to said arm (11) during said inversion by means of a mechanical element (22) which is rotatably secured about said oscillation axis (14a), said mechanical element (22) being driven in rotation about said oscillation axis (14a) by said arm (11) during the inversion of said frame (2), said damper (17) being configured so as to act counter the rotation of said mechanical element (22) about said oscillation axis (14a) so as to slow down the oscillation of the arm (11) during said inversion.

12. A plough (1) according to claim 11 when claim 8 depends on claim 7, wherein said second abutment (20) is configured to limit a rotation path of said mechanical element (22) about said oscillation axis (14a).

13. A plough (1) according to any one of the preceding claims, wherein said wheel (9) is a combined wheel, said arm (11) being configured to rotate about a repositioning axis (15a) which is perpendicular to said oscillation axis (14a) in order to move said combined wheel (9) between a first position (15') in which said combined wheel (9) is configured to adjust the working depth of the ploughing elements (6a, 6b) and a second position (15") in which said combined wheel (9) is configured to support said frame (2) in a transport position.

14. A plough (1) according to claim 13 when dependent on claim 11, wherein said arm (11) is disconnected from said mechanical element (22) when said combined wheel (9) is in said second position (15").

15. A plough (1) according to any one of the preceding claims, wherein said oscillation axis (14a) is perpendicular with respect to said inversion axis (7a).

## Patentansprüche

1. Anbau-Wendepflug (1) mit einem Rahmen (2) und einem Befestigungselement (4) zum Befestigen des Rahmens (2) an einem Traktor, wobei der Rahmen (2) zumindest ein erstes Pflugelement (6a) und zumindest ein zweites Pflugelement (6b) trägt, die einander gegenüberliegen, und der Rahmen (2) drehbar am Befestigungselement (4) um eine Umkehrachse (7a) befestigt ist, um den Rahmen (2) umzukehren, wobei der Pflug (1) ferner ein Rad (9) aufweist, das zum Einstellen einer Arbeitstiefe des Pfluges in zwei entgegengesetzte Betriebspositionen des Rades (9) eingerichtet ist, in denen das erste Pflugelement (6a) und zweite Pflugelement (6b) jeweils wirksam sind, einen Arm (11) aufweist, der einerseits das Rad (9) trägt und andererseits drehbar mit einem Träger (13) des Rahmens (2) um eine Schwingachse (14a) verbunden ist, die quer in Bezug auf die Umkehrachse (7a) verläuft, um eine Schwingung des Arms (11) zwischen der ersten und zweiten Betriebsposition des Rades (9) und einer ersten Anschlagvorrichtung (16a) und einer zweiten Anschlagvorrichtung (16b) zu ermöglichen, die eingerichtet sind, um die Schwingung des Arms (11) in der ersten bzw. zweiten Betriebsposition zu begrenzen, um eine entsprechende Arbeitstiefe des Pfluges in den Betriebspositionen zu bilden, **dadurch gekennzeichnet, dass** die ersten und zweiten Anschlagvorrichtungen (16a, 16b) mit einem ersten Schwingelement (5a) bzw. einem zweiten Schwingelement (5b) verbunden sind, wobei die ersten und zweiten Schwingelemente (5a, 5b) am Träger (13) angelenkt sind und kinematisch einstellbar mittels eines Einstellelements (19) miteinander verbunden sind, das eingerichtet ist, um eine Bewegung eines der Schwingelemente (5a, 5b) auf das andere Schwingelement (5b, 5a) zu übertragen, um die Arbeitstiefe der gegenüberliegenden Pflugelemente (6a, 6b) symmetrisch einzustellen.

2. Pflug (1) nach Anspruch 1, wobei das erste Schwingelement (5a) und das zweite Schwingelement (5b) Kipphebel eines ersten Gelenkvierecks (Q1) bilden, dessen eine Seite an der Stütze (13) befestigt ist, wobei das Einstellelement (19) eine Verbindungsstange des ersten Gelenkvierecks (Q1) bildet und eingerichtet ist, um die Länge der Verbindungsstange einzustellen.

3. Pflug (1) nach Anspruch 1 oder 2, wobei das erste oder zweite Schwingelement (5a, 5b) und der Arm (11) beim Anliegen an der ersten oder zweiten Anschlageinrichtung (16a, 16b) Kipphebel eines zweiten Gelenkvierecks (Q2) bilden, dessen eine Seite am Träger (13) befestigt ist, wobei die erste oder zweite Anschlagvorrichtung (16a, 16b) eine Verbindungsstange des zweiten Gelenkvierecks (Q2) bildet.

4. Pflug (1) nach einem der vorhergehenden Ansprüche, wobei das Einstellelement (19) zumindest ein Einstellelement aufweist, das aus einem Hydraulikzylinder, einer mechanischen Zugstange, einer elektromechanischen Vorrichtung oder einem Element, das mit einer Vielzahl von Löchern versehen ist, ausgewählt wird.

5. Pflug (1) nach einem der vorhergehenden Ansprüche, wobei die ersten und zweiten Schwingelemente (5a, 5b) am Träger (13) um jeweilige Gelenkachsen (5ax) angelenkt sind, die parallel zur Schwingachse (14a) sind.

6. Pflug (1) nach einem der vorhergehenden Ansprüche, wobei der Träger (13) ein erstes Anlageelement (8) aufweist, das eingerichtet ist, um einen Drehweg der ersten und zweiten Schwingelemente (5a, 5b) um die Gelenkachsen (5ax) zu begrenzen.

7. Pflug (1) nach einem der vorhergehenden Ansprüche, wobei die ersten und zweiten Schwingelemente (5a, 5b) ein zweites Anlageelement (20) aufweisen, das eingerichtet ist, um einen Schwingweg des Arms (11) um die Schwingachse (14a) zu begrenzen.

8. Pflug (1) nach einem der vorhergehenden Ansprüche, der ferner einen Dämpfer (17) aufweist, der eingerichtet ist, um die Schwingung des Arms (11) während der Umkehr des Rahmens (2) zu verlangsamen.

9. Pflug (1) nach Anspruch 8, wobei der Dämpfer (17) ein bewegliches Element (30) aufweist, das kinematisch mit dem Arm (11) während der Umkehr des Rahmens (2) verbunden ist, wobei das bewegliche Element (30) eingerichtet ist, um entlang eines Trägers (31) zu gleiten, der sich in Längsrichtung erstreckt und dessen Enden (32) am Träger (13) befestigt sind, um die Schwingung des Arms (11) während der Umkehr zu verlangsamen.

10. Pflug (1) nach Anspruch 9, wobei der Träger (31) eine Stange (31) ist und das bewegliche Element (30) eine Hülse (30) der Stange (31) ist.

11. Pflug (1) nach Anspruch 9 oder 10, wobei das bewegliche Element (30) kinematisch mit dem Arm (11) während der Umkehr mittels eines mechanischen Elements (22) verbunden ist, das um die Schwingachse (14a) drehbar befestigt ist, wobei das mechanische Element (22) beim Drehen um die Schwingachse (14a) durch den Arm (11) während der Umkehr des Rahmens (2) angetrieben wird, wobei der Dämpfer (17) eingerichtet ist, um der Drehung des mechanischen Elements (22) um die Schwingachse (14a) entgegenzuwirken, um die Schwingung des Arms (11) während der Umkehr zu verlangsamen.

12. Pflug (1) nach Anspruch 11, wenn Anspruch 8 von Anspruch 7 abhängt, wobei das zweite Anlageelement (20) eingerichtet ist, um einen Drehweg des mechanischen Elements (22) um die Schwingachse (14a) zu begrenzen.

13. Pflug (1) nach einem der vorhergehenden Ansprüche, wobei das Rad (9) ein kombiniertes Rad ist, wobei der Arm (11) eingerichtet ist, um sich um eine Neupositionierungsachse (15a) zu drehen, die senkrecht zur Schwingachse (14a) ist, um das kombinierte Rad (9) zwischen einer ersten Position (15'), in der das kombinierte Rad (9) eingerichtet ist, um die Arbeitstiefe der Pflugelemente (6a, 6b) einzustellen, und einer zweiten Position (15") zu bewegen, in der das kombinierte Rad (9) eingerichtet ist, um den Rahmen (2) in einer Transportposition zu stützen.

14. Pflug (1) nach Anspruch 13 in Abhängigkeit von Anspruch 11, wobei der Arm (11) vom mechanischen Element (22) getrennt ist, wenn sich das kombinierte Rad (9) in der zweiten Position (15") befindet.

15. Pflug (1) nach einem der vorhergehenden Ansprüche, wobei die Schwingachse (14a) senkrecht in Bezug auf die Umkehrachse (7a) verläuft.

## Revendications

1. Charrue réversible montée (1) comprenant un châssis (2) et un élément de fixation (4) pour fixer ledit châssis (2) à un tracteur, ledit châssis (2) portant au moins un premier élément de labourage (6a) et au moins un second élément de labourage (6b) qui sont mutuellement opposés et le châssis (2) étant fixé, en rotation, audit élément de fixation (4) autour d'un axe d'inversion (7a) afin d'inverser ledit châssis (2), ladite charrue (1) comprenant en outre une roue (9) qui est configurée pour régler une profondeur de travail de la charrue dans deux positions opérationnelles opposées de la roue (9), dans lesquelles lesdits premier élément de labourage (6a) et second élément de labourage (6b) sont respectivement opérationnels, un bras (11) qui, d'une part, supporte ladite roue (9) et d'autre part, est raccordée, de manière rotative, à un support (13) dudit châssis (2) autour d'un axe d'oscillation (14a) qui est transversal par rapport audit axe d'inversion (7a) afin de permettre une oscillation dudit bras (11) entre la première et la seconde position opérationnelle de la roue (9) et un premier dispositif d'arrêt (16a) et un second dispositif d'arrêt (16b) qui sont configurés pour limiter l'oscillation du bras (11) respectivement dans ladite première et ladite seconde position opérationnelle, afin de définir une profondeur de travail correspondante de la charrue dans lesdites positions opérationnelles, **caractérisée en ce que** lesdits premier et second dispositifs d'arrêt (16a, 16b) sont respectivement raccordés à un premier élément oscillant (5a) et à un second élément oscillant (5b), lesdits premier et second éléments oscillants (5a, 5b) étant articulés audit support (13) et étant raccordés entre eux par voie cinématique d'une manière réglable au moyen d'un élément de réglage (19) qui est configuré pour transmettre un mouvement de l'un des éléments oscillants (5a, 5b) à l'autre élément oscillant (5b, 5a) afin de régler, de manière symétrique, la profondeur de travail des éléments de labourage (6a, 6b) opposés.

2. Charrue (1) selon la revendication 1, dans laquelle lesdits premier élément oscillant (5a) et second élément oscillant (5b) forment des balanciers d'un premier quadrilatère articulé (Q1) ayant un côté fixé dans ledit support (13), ledit élément de réglage (19) formant une bielle dudit premier quadrilatère articulé (Q1) et étant configuré pour régler la longueur de ladite bielle.

3. Charrue (1) selon la revendication 1 ou 2, dans laquelle ledit premier ou second élément oscillant (5a, 5b) et ledit bras (11) lorsqu'il est en butée avec ledit premier ou second dispositif d'arrêt (16a, 16b) forment des balanciers d'un second quadrilatère articulé (Q2) ayant un côté fixé dans ledit support (13), ledit premier ou second dispositif d'arrêt (16a, 16b) formant une bielle dudit second quadrilatère articulé (Q2).

4. Charrue (1) selon l'une quelconque des revendications précédentes, dans laquelle ledit élément de réglage (19) comprend au moins un élément de réglage au choix parmi un vérin hydraulique, un tirant mécanique, un dispositif électromécanique ou un élément prévu avec une pluralité de trous.

5. Charrue (1) selon l'une quelconque des revendications précédentes, dans laquelle lesdits premier et second éléments oscillants (5a, 5b) sont articulés audit support (13) autour d'axes de charnière (5ax) respectifs qui sont parallèles audit axe d'oscillation (14a).

6. Charrue (1) selon l'une quelconque des revendications précédentes, dans laquelle ledit support (13) comprend une première butée (8) qui est configurée pour limiter une course de rotation desdits premier et second éléments oscillants (5a, 5b) autour desdits axes de charnière (5ax).

7. Charrue (1) selon l'une quelconque des revendications précédentes, dans laquelle lesdits premier et second éléments oscillants (5a, 5b) comprennent une seconde butée (20) qui est configurée pour limiter une course d'oscillation dudit bras (11) autour dudit axe d'oscillation (14a).

8. Charrue (1) selon l'une quelconque des revendications précédentes, comprenant en outre un amortisseur (17) qui est configuré pour ralentir l'oscillation dudit bras (11) pendant l'inversion du châssis (2).

9. Charrue (1) selon la revendication 8, dans laquelle ledit amortisseur (17) comprend un élément mobile (30) qui est raccordé, par voie cinématique, audit bras (11) pendant l'inversion du châssis (2), ledit élément mobile (30) étant configuré pour coulisser le long d'un support (31) qui s'étend longitudinalement et dont les extrémités (32) sont fixées audit support (13) afin de ralentir l'oscillation du bras (11) pendant ladite inversion.

10. Charrue (1) selon la revendication 9, dans laquelle ledit support (31) est une tige (31) et ledit élément mobile (30) est un manchon (30) de ladite tige (31).

11. Charrue (1) selon la revendication 9 ou 10, dans laquelle ledit élément mobile (30) est raccordé, par voie cinématique, audit bras (11) pendant ladite inversion au moyen d'un élément mécanique (22) qui est fixé, de manière rotative, autour dudit axe d'oscillation (14a), ledit élément mécanique (22) étant entraîné en rotation autour dudit axe d'oscillation (14a) par ledit bras (11) pendant l'inversion dudit châssis (2), ledit amortisseur (17) étant configuré pour agir contre la rotation dudit élément mécanique (22) autour dudit axe d'oscillation (14a) afin de ralentir l'oscillation du bras (11) pendant ladite inversion.

12. Charrue (1) selon la revendication 11, lorsque la revendication 8 dépend de la revendication 7, dans laquelle ladite seconde butée (20) est configurée pour limiter une course de rotation dudit élément mécanique (22) autour dudit axe d'oscillation (14a).

13. Charrue (1) selon l'une quelconque des revendications précédentes, dans laquelle ladite roue (9) est une roue combinée, ledit bras (11) étant configuré pour tourner autour d'un axe de repositionnement (15a) qui est perpendiculaire audit axe d'oscillation (14a) afin de déplacer ladite roue combinée (9) entre une première position (15') dans laquelle ladite roue combinée (9) est configurée pour régler la profondeur de travail des éléments de labourage (6a, 6b) et une seconde position (15") dans laquelle ladite roue combinée (9) est configurée pour supporter ledit châssis (2) dans une position de transport

14. Charrue (1) selon la revendication 13, lorsqu'elle dépend de la revendication 11, dans laquelle ledit bras (11) est déconnecté dudit élément mécanique (22), lorsque ladite roue combinée (9) est dans ladite seconde position (15").

15. Charrue (1) selon l'une quelconque des revendications précédentes, dans laquelle ledit axe d'oscillation (14a) est perpendiculaire par rapport audit axe d'inversion (7a).
